# EUROPÄISCHE PATENTSCHRIFT

(11) **EP 1 759 180 B1**
(45) Veröffentlichungstag und Bekanntmachung des Hinweises auf die Patenterteilung: **15.10.2008**
(21) Anmeldenummer: 05752465.4
(22) Anmeldetag: 20.06.2005
(51) Int. Cl.: G01J 3/42, G01N 21/15, G01N 1/40, G01N 21/55

(54) **VERFAHREN UND EINRICHTUNG ZUR ABSORPTIONSSPEKTROSKOPIE**
ABSORPTION SPECTROSCOPY METHOD AND DEVICE
PROCEDE ET DISPOSITIF DE SPECTROSCOPIE PAR ABSORPTION

(30) Priorität: 18.06.2004 AT 10412004
(43) Veröffentlichungstag der Anmeldung: 07.03.2007
(73) Patentinhaber: Austria Wirtschaftsservice Gesellschaft mit beschränkter Haftung, 1030 Wien (AT); Lendl, Bernhard, 1160 Wien (AT); Schnöller, Johannes, 1050 Wien (AT); Radel, Stefan, 1140 Wien (AT); Benes, Ewald, 2362 Biedermannsdorf (AT)
(72) Erfinder: LENDL, Bernhard, A-1160 Wien (AT); SCHNÖLLER, Johannes, A-1050 Wien (AT); RADEL, Stefan, A-1140 Wien (AT); BENES, Ewald, A-2362 Biedermannsdorf (AT)
(74) Vertreter: Sonn & Partner Patentanwälte
(86) Internationale Anmeldenummer: PCT/AT2005/000217
(87) Internationale Veröffentlichungsnummer: WO 2005/124300

(56) Entgegenhaltungen:
- EP-A- 1 134 577
- DE-A1- 4 333 560
- DE-A1- 19 811 876
- BENES E ET AL INSTITUTE OF ELECTRICAL AND ELECTRONICS ENGINEERS: "Ultrasonic separation of suspended particles" 2001 IEEE ULTRASONICS SYMPOSIUM PROCEEDINGS. ATLANTA, GA, OCT. 7 - 10, 2001, IEEE ULTRASONICS SYMPOSIUM PROCEEDINGS, NEW YORK, NY : IEEE, US, Bd. VOL. 2 OF 2, 7. Oktober 2001 (2001-10-07), Seiten 649-659, XP010584603 ISBN: 0-7803-7177-1
- RADEL S ET AL: "Ultrasonic standing wave accelerates on-line measurement and prevents coating of a FTIR ATR flow cell" SENSORS, 2004. PROCEEDINGS OF IEEE VIENNA, AUSTRIA OCT. 24 - 27, 2004, PISCATAWAY, NJ, USA,IEEE, 24. Oktober 2004 (2004-10-24), Seiten 757-759, XP010793513 ISBN: 0-7803-8692-2

## Beschreibung

Die Erfindung betrifft ein Verfahren sowie eine Einrichtung zur Durchführung von Messungen durch Absorptionsspektroskopie gemäß den einleitenden Teilen der unabhängigen Ansprüche.

Absorptionsspektroskopie, insbesondere mit Hilfe von Infrarot, wird vielfach zur Feststellung bestimmter Substanzen, beispielsweise im Zuge der Überwachung von Prozessen, eingesetzt. Hierzu werden Durchflusszellen verwendet, durch die die zu detektierenden Substanzen mit Hilfe von Trägerflüssigkeiten hindurch geleitet werden. Ein Problem kann dabei die Verunreinigung des in der Durchflusszelle verwendeten Sensors durch die Substanzen verursachen, und dies insbesondere dann, wenn es sich um biotechnologische Prozesse bzw. Fermentationsprozesse handelt, die zu überwachen sind, wobei die in einem Fermentationsmedium produzierten Substanzen und deren Gehalt, aber auch Mikroorganismen und deren physiologischer Status überwacht werden können. Für eine derartige Prozessüberwachung ist in der WO 02/082061 A bereits der Einsatz einer FTIR-ATR-Durchflusszelle vorgeschlagen worden (FTIR-Fouriertransformations-Infrarot; ATR-attenuierte Totalreflexion); hierbei wird ein Sensorelement in Form eines ATR-Kristalls, etwa ein Diamant, verwendet wird, in dem eine Totalreflexion von eingeleiteter Infrarotstrahlung im Zuge der Spektroskopie stattfindet, wobei die Totalreflexion an den Grenzflächen des ATR-Kristalls abhängig von der Anlagerung der zu detektierenden Substanzen (Teilchen) abgeschwächt ("attenuiert") wird. Zur Reinigung des ATR-Kristalls oder allgemein der Durchflusszelle wird ein chemisches Reinigungsverfahren angeführt, wobei die Durchflusszelle mit entsprechenden Reinigungssubstanzen gespült wird. Die Beseitigung von derartigen polymeren oder organischen Ablagerungen (häufig auch als Biofilm bezeichnet) vom optischen Sensor, also insbesondere vom Diamantfenster eines ATR-Elements, ist jedoch durch den Einsatz von Waschlösungen nur in relativ langen Reinigungszeiten zu bewerkstelligen. Dieses Problem der Filmbildung auf der Sensorfläche ist auch bereits in der US 5 604 132 A angesprochen, wobei dort eine physikalische Reinigung in Form eines Abstreifens angedeutet ist, was aber ebenfalls aufwendig und im Hinblick auf die empfindlichen Kristallflächen problematisch ist.

Aus der DE 43 33 560 A1 ist eine Vorrichtung zur kontinuierlichen spektroskopischen Analyse nach dem Prinzip der abgeschwächten Totalreflexion bekannt, wobei vorgeschlagen wird, zur Reinigung der Messfläche an einem ATR-Kristall von Produktrückständen eine Ultraschallquelle zu verwenden, die in der Nähe der Messfläche angeordnet ist. Im Einzelnen werden dabei mit der Ultraschallquelle Ultraschallwellen erzeugt, die gegen die Messfläche gerichtet sind und sich zu dieser Messfläche hin ausbreiten.

Weiters ist in der EP 1 134 577 A2 eine selbst-reinigende optische Durchflusszelle beschrieben, wobei auch hier ein Ultraschallgenerator vorgesehen ist, um Teilchen bzw. Verunreinigungen, die an inneren optischen Flächen anhaften, und die die Messqualität beeinträchtigen, zu lösen und zu entfernen. Dabei ist auch vorgesehen, die Frequenz der Ultraschallwellen über einen Bereich zu variieren.

In dem Artikel Benes et al., Institute of a electrical and electronics engeneers: "Ultrasonic Separation of Suspended Particles", 2001 IEEE Ultrasonics Symposium Proccedings, Atlanta, GA, Oktober 7-10, 2001, IEE Ultrasonic Symposium Proccedings, New York, NY: IEEE US Vol. 2 OF 27 Oktober 2001, Seiten 649 bis 659, ist eine Separation von suspendierten Partikeln mit Hilfe von Ultraschall beschrieben, wobei auf die Verwendung von Stehwellen hingewiesen wird, um suspendierte Partikel beispielweise in Druckknotenebenen zu konzentrieren. Dabei geht es um die Trennung verschiedenartiger Partikel, und es wird ein spezieller Schichtaufbau vorgeschlagen.

Auch aus der US 6 324 900 B ist die Anwendung von Ultraschall zu Reinigungszwecken an sich bereits bekannt, jedoch ist dort eine spezielle Reinigung von Grenzflächen von Durchleuchtungselementen betroffen, welche zur Messung der Trübung einer Flüssigkeit verwendet werden. Im Einzelnen wird mit Hilfe eines Ultraschallsenders ein niederfrequentes Ultraschallfeld (im Bereich von einigen 10 kHz) abgestrahlt, wodurch in der Flüssigkeit gasförmige Mikrokavitäten erzeugt werden, welche durch Implodieren eine Reinigung der genannten optischen Elemente bewirken sollen. Es handelt sich somit um eine andersartige Reinigungstechnik, wenn auch mit Ultraschall, bei andersartigen optischen Messeinrichtungen.

Es ist somit Aufgabe der Erfindung, ein Verfahren sowie eine Einrichtung der eingangs angeführten Art vorzuschlagen, mit dem bzw. mit der eine Verbesserung der Messung hinsichtlich Messzeit und Langzeitstabilität und insbesondere eine effiziente, rasche, automatische und auch eine reproduzierbare Qualität aufweisende Reinigung der Durchflusszelle möglich wird, wobei weiters angestrebt wird, die Bildung von Biofilmen in der Durchflusszelle zu verlangsamen oder zu verhindern, ohne manuell in Überwachungszyklen eingreifen zu müssen.

Zur Lösung dieser Aufgabe sieht die Erfindung ein Verfahren sowie eine Einrichtung wie in den anliegenden unabhängigen Ansprüchen 1 und 11 definiert vor. Vorteilhafte Ausführungsformen und Weiterbildungen sind in den jeweiligen Unteransprüchen gekennzeichnet.

Die erfindungsgemäße Technologie setzt somit zur Verbesserung der Messung bzw. zur Reinigung der Durchflusszellen, insbesondere der darin befindlichen Sensorflächen, Ultraschall ein, wobei ebene Ultraschallfelder zur Teilchenmanipulation erzeugt werden.

Derartige Ultraschallfelder in Form von sogenannten "Quasi-Stehwellen" sind gut kontrollierbar, wobei das Ultraschallfeld im Fall des Einsatzes von Piezowandlern (Piezo-Transducer), wie dies bevorzugt wird, einfach durch entsprechende Einstellung des den jeweiligen Piezowandler ansteuernden elektrischen Signals (hinsichtlich Frequenz und Amplitude) gesteuert werden kann. Um die gewünschte - räumliche - Stehwelle zu erhalten, kann die emittierte Ultraschallwelle auf der gegenüberliegenden Seite der Durchflusszelle, etwa an einem ATR-Sensor, reflektiert werden, wobei die rücklaufende Welle dann der abgestrahlten Welle überlagert wird, so dass sich die Stehwelle ausbildet. Bei dieser Stehwelle ist die Hüllkurve der Amplitude in Richtung der Schallausbreitungsrichtung stationär, also zeitlich konstant.

Bei einer solchen Ultraschall-Stehwelle wirken auf in der Durchflusszelle vorhandene, insbesondere auf an der Sensorfläche abgelagerte, Teilchen axiale (primäre) Schallstrahlungskräfte, wobei die Wirkung auf die Teilchen, z.B. Zellen, etwa Hefezellen, derart ist, dass diese Teilchen in Richtung der Druckknoten des Stehwellenfeldes gedrängt werden. Demgemäß werden die in der Trägerflüssigkeit suspendierten Teilchen in der Durchflusszelle in Ebenen parallel zur Piezo-Transducer-Oberfläche konzentriert, nämlich in der oder den Druckknoten-Ebenen. Da weiters in der Regel das Ultraschallfeld aufgrund der nicht ganz homogenen Ultraschallerzeugung im Piezo-Transducer z.B. in der Mitte stärker ist als am Rand, wirken auf die Teilchen auch transversale primäre Schallstrahlungskräfte, was nach der Konzentration der Teilchen in den Druckknoten-Ebenen dazu führt, dass innerhalb dieser Ebenen auf die Teilchen Kräfte in Richtung einer (Mitten-)Achse der Durchflusszelle ausgeübt werden, so dass es zu einer verstärkten Agglomeration der Teilchen an den Schnittstellen dieser Achse mit den Druckknoten-Ebenen kommt; als Resultat wird im Fall von mehreren Druckknoten-Ebenen eine Art Kette von Teilchenagglomeraten in der Durchflusszelle erhalten. Diese Konzentration der Teilchen bzw. diese Agglomerate bleibt bzw. bleiben so lange bestehen, so lange das Ultraschallfeld aktiv ist. Beim Deaktivieren des Ultraschallfeldes werden die Teilchen, im Falle eines Flüssigkeitsflusses durch die Durchflusszelle durch diesen "Flow" aus dieser Zelle transportiert. Es sei aber erwähnt, dass die Spektroskopiemessung im Prinzip auch ohne Abschaltung des Ultraschall-Stehwellenfeldes denkbar ist, und zwar dann, wenn die (unterste) Druckknoten-Ebene direkt an der Sensoroberfläche liegt, so dass dort die Teilchen gesammelt (und der Messung zugrunde gelegt) werden.

Für die Durchführung der Spektroskopie ist weiters auch von Vorteil, dass die Teilchenagglomerate eine kürzere Sedimentationszeit aufweisen als einzelne Zellen, so dass durch die Verkürzung der Sedimentationszeit raschere Messungen, in kürzeren Intervallen hintereinander, möglich werden; hierbei wird andererseits auch der störenden Ablagerung von Teilchen auf der Sensorfläche, der Biofilmbildung, entgegengewirkt. Untersuchungen haben gezeigt, dass dann, wenn die Teilchen vor dem Absinken auf die Sensorfläche durch Aktivieren des Ultraschallfeldes eine Zeitdauer von beispielsweise 30 s schwebend über dem Sensorelement festgehalten und agglomeriert werden, das so geschaffene Teilchenagglomerat wesentlich schneller sedimentiert als einzelne Teilchen, nämlich in einem Viertel der Zeit bei normaler Sedimentation, wenn eine gleiche IR-Absorptionsintensität vorausgesetzt wird.

Die Durchflusszelle kann beispielsweise zylindrisch sein, wobei an den einander gegenüberliegenden Stirnseiten zum einen der IR-Sensor, insbesondere ein FTIR-ATR-Detektor, und auf der anderen Seite der Piezo-Transducer, allgemein Ultraschallsender, angeordnet wird. In der zylinderförmigen Wand der Durchflusszelle sind Öffnungen zum Anschließen eines herkömmlichen, z.B. automatischen Fließsystems aus einem Bioreaktor vorgesehen. Die Durchflusszelle kann jedoch außer zylindrisch auch anders, z.B. allgemein quaderförmig, mit einem rechteckigen, insbesondere quadratischen Grundriss, ausgebildet sein.

Weiters ist es auch denkbar, den Ultraschallsender bzw. Piezowandler unterhalb des IR-Sensors anzubringen und den Ultraschall durch diesen Sensor hindurch in die Durchflusszelle abzustrahlen. Es kann dann auf der Oberseite der Durchflusszelle ein Reflektor für den Ultraschall vorgesehen sein. Denkbar ist es aber auch, dort einen zweiten Ultraschallsender anzubringen, dessen Abstrahlrichtung bevorzugt entgegengesetzt zu jener des erstgenannten Ultraschallsenders ist, und dessen Ultraschall zumindest im Wesentlichen dieselbe Frequenz und dieselbe Amplitude wie die Ultraschallwelle des ersten Ultraschallsenders aufweist. Auch auf diese Weise kann eine stehende Welle in der Durchflusszelle erzeugt werden. Wenn ein unterer Piezowandler vorgesehen ist, der den Ultraschall durch den Sensor hindurch abstrahlt, ist die Steuerung der untersten Knotenebene in ihrem Abstand von der Sensorfläche leichter möglich als in dem Fall, dass der Sensor den Ultraschall-Reflektor bildet und der Piezo-Transducer gegenüber, an der Oberseite der Durchflusszelle, angeordnet wird. Hierzu kann die Frequenz des Ultraschallfeldes geeignet geregelt und eingestellt werden.

Die Höhe der Durchflusszelle kann im Millimeterbereich liegen, wobei sie beispielsweise wertemäßig zwischen dem Wert von etwa einer halben Wellenlänge und ungefähr hundert Wellenlängen des angewandten Ultraschalls liegen kann.

Bevorzugt wird Ultraschall mit einer Frequenz in der Größenordnung von mehreren Hundert kHz bis zu einem oder einigen MHz eingesetzt, wie etwa einer Frequenz zwischen 1 oder 1,5 MHz und 2 MHz, insbesondere 1,8 bis 1,9 MHz. Für ein verbessertes Lösen eines störenden Biofilms auf der Sensoroberfläche kann es auch zweckmäßig sein, das bzw. ein Ultraschallfeld schräg zur Durchflussrichtung der Durchflusszelle zu erzeugen. Bevorzugt werden bei diesem Fall zwei benachbarte Piezowandler an der Durchflusszelle angeordnet, von denen der eine ein Ultraschallfeld im Wesentlichen senkrecht zur Durchflussrichtung erzeugt, wogegen der andere ein schräg zur Durchflussrichtung laufendes Ultraschallfeld abgibt. Die beiden Piezowandler werden dabei bevorzugt alternierend zum Ablösen und Anheben von Teilchen von der Sensorfläche aktiviert.

Ein Vorteil der erfindungsgemäßen Technologie ist auch, dass die industrielle Einsetzbarkeit der FTIR-ATR-Spektroskopie, wie in der WO 02/082061 A beschrieben, vor allem hinsichtlich Wartungsfreundlichkeit und Langzeitstabilität wesentlich verbessert wird. Ein Vorteil der vorliegenden Reinigungstechnik mit Hilfe von Ultraschall liegt ferner darin, dass auch keine Reagenzien, d.h. keine Waschlösung etc., benötigt werden bzw. wird, und dass auch eine Verfälschung der Messergebnisse durch derartige Reagenzien vermieden wird.

Die Erfindung wird nachfolgend anhand von bevorzugten Ausführungsbeispielen, auf die sie jedoch nicht beschränkt sein soll, und unter Bezugnahme auf die Zeichnung noch weiter erläutert. In der Zeichnung zeigen im Einzelnen:
Fig. 1 schematisch einen Aufbau einer (Diamant)-FTIR-ATR-Durchflusszelle mit einer erfindungsgemäßen Ultraschall-Reinigungs-Einrichtung, wobei eine zusätzliche Modifikation in Fig. 1 im unteren Bereich mit strichlierten Linien veranschaulicht ist;
Fig. 2 eine andere Ausführungsform einer solchen FTIR-ATR-Durchflusszelle, wobei oberseitig zwei Piezo-Transducer als Ultraschallsender vorgesehen sind;
Fig. 3 ein Diagramm: Absorption über Wellenzahl, zur Veranschaulichung der Reinigungsleistung bei der erfindungsgemäßen Reinigungstechnik im Vergleich zu einem herkömmlichen chemischen Reinigungsverfahren sowie zu dem Fall, dass überhaupt keine Reinigung vorgenommen wird; und
Fig. 4 in einem Diagramm: Absorption/Wellenzahl einen Vergleich der auf Basis der erfindungsgemäßen Ultraschall-Reinigung ermöglichten beschleunigten Sedimentation mit einer herkömmlichen Sedimentation (Schwerkraftsedimentation), wobei ersichtlich ist, dass bei Messungen in gleichen Zeitabständen im Fall der Anwendung der Reinigung nach der erfindungsgemäßen Technik zu Folge der beschleunigten Sedimentation größere Abstände der Messkurven erhalten werden als im Fall einer normalen Sedimentation.

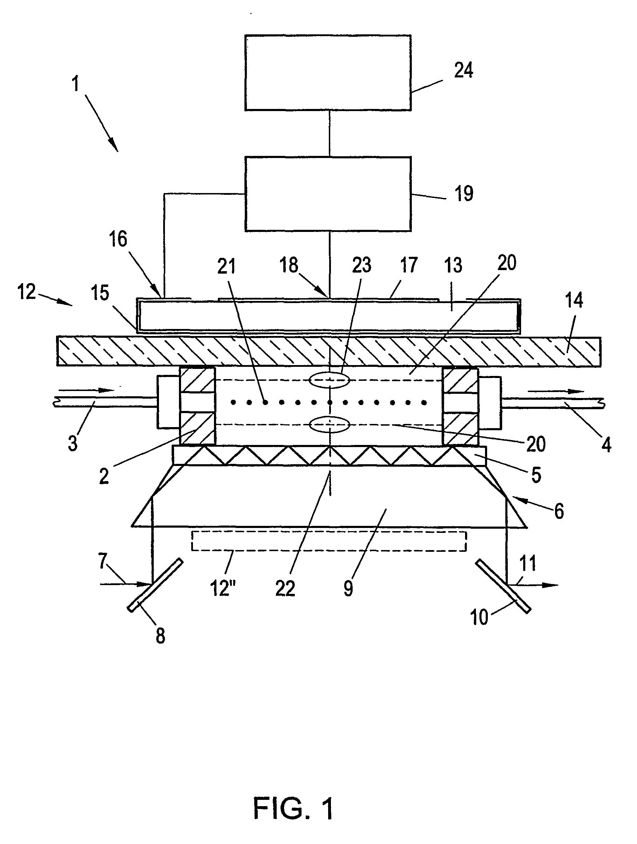

In Fig. 1 ist schematisch eine Durchflusszelle 1 veranschaulicht, wie sie für IR-Spektroskopie, insbesondere für FTIR-ATR-Spektroskopie, verwendet wird. Diese Durchflusszelle 1 weist beispielsweise eine zylindrische Wand 2 auf, der ein automatisches Fließsystem zur Durchführung der gewünschten Messungen zugeordnet ist; von diesem Fließsystem sind eine Zuleitung 3 sowie eine Ableitung 4 ersichtlich, wobei eine an sich herkömmliche Befestigung an der Zellenwand 2 vorgesehen ist. Auf diese Weise können die zu untersuchenden Substanzen, insbesondere Mikroorganismen, z.B Hefezellen, bei der Überwachung von biotechnologischen Prozessen, in einer Trägerflüssigkeit der Durchflusszelle 1 zugeführt und von ihr wieder abgeführt werden.

An der Unterseite der Durchflusszelle 1 befindet sich das eigentliche Sensorelement 5, nämlich das Diamantfenster eines horizontal angebrachten ATR-Elements 6. Dabei wird beispielsweise, siehe Pfeil 7, von einem Interferometer kommende Infrarotstrahlung über einen Spiegel 8 und über ein Zink-Selen-Element 9 dem Diamant-Sensor 5 zugeführt und von diesem wiederum über einen Spiegel 10 in Richtung des Pfeiles 11 zu einem nicht näher veranschaulichten Detektor weggeleitet. Der Diamant-Sensor 5 bildet ein ATR-Kristallelement für die FTIR-ATR-Spektroskopie, wobei sich hierzu, da es sich um eine an sich herkömmliche Technik handelt, nähere Erläuterungen erübrigen können; es kann diesbezüglich insbesondere auf die WO 02/082061 A verwiesen werden, deren Offenbarung hier durch Bezugnahme als mit eingeschlossen angesehen wird.

An der Oberseite der Durchflusszelle 1 befindet sich ein Ultraschall-Transducer oder -Wandler 12, der beispielsweise ein keramisches Piezoelement 13 enthält, welches auf einem plättchenförmigen Glasträger 14 aufgeklebt ist. Das Piezoelement 13 hat z.B. einen Durchmesser von 20 mm und eine Dicke von 1 mm, und es weist eine untere flächige Elektrode 15, z.B. aus Silber, auf, welche über die Schmalseiten des Piezoelements 13 zur Oberseite gezogen ist und dort bei 16 elektrisch kontaktiert ist. Eine zweite kreisförmige Elektrode 17 befindet sich an der Oberseite des Piezoelements 13 und ist direkt bei 18 kontaktiert. Die beiden Kontakte 16, 18 sind mit einem Frequenzgenerator 19, etwa einem Frequenzleistungs-Synthesizer FPS 4025, verbunden, um eine Schwingung beispielsweise im Bereich von 1,8 MHz bis 1,9 MHz zu erzeugen. Das elektrische Signal mit dieser Frequenz wird über die Kontakte 16, 18 an das Piezoelement 13, d.h. an dessen Elektroden 15, 17, angelegt, so dass dieses eine entsprechende Ultraschallwelle mit der Frequenz von 1,8 MHz bis 1,9 MHz emittiert. Diese Ultraschallwelle wird gemäß der Darstellung in Fig. 1 vertikal nach unten durch die Durchflusszelle 1 hindurch, also quer zur Durchflussrichtung zwischen den Leitungen 3, 4, zum Sensor 5 abgestrahlt, wobei der Sensor 5 einen Ultraschall-Reflektor bildet und die Ultraschallwelle wiederum vertikal nach oben reflektiert, so dass eine stehende Ultraschallwelle im Inneren der Durchflusszelle 1 erhalten wird. Das so gebildete Ultraschall-Stehwellenfeld in der Durchflusszelle 1 hat Druckknoten-Ebenen bzw. Druckbauchebenen, welche um eine ViertelWellenlänge zueinander beabstandet sind (wobei in einem Stehwellenfeld weiters bekanntlich Druckknoten den Schallwellenbäuchen und umgekehrt Druckbauchstellen den Schallknotenstellen entsprechen). In Fig. 1 ist schematisch mit strichlierten Linien das Vorliegen von Druckknoten-Ebenen 20 und von einer Druckbauchebene 21 veranschaulicht; selbstverständlich kann die Anzahl der Druckknoten-Ebenen bzw. Druckbauchebenen variieren, wobei die Anzahl dieser Knotenebenen bzw. Bauchebenen von der Schallgeschwindigkeit in der Durchflusszelle 1, d.h. vom darin enthaltenen Medium, sowie insbesondere von der Höhe der Durchflusszelle 1 und von der Frequenz abhängt. Beispielsweise kann die Durchflusszelle 1 eine Höhe von 4,05 mm sowie weiters einen Innendurchmesser von 5,25 mm und eine Wandstärke von 2,35 mm aufweisen. Die halbe Wellenlänge als Distanz zwischen beispielsweise zwei benachbarten Knotenebenen 20 kann beispielsweise in der Größenordnung von 0,3 mm oder 0,4 mm liegen. Dies würde bedeuten, dass gut zehn Knotenebenen innerhalb der Durchflusszelle 1 gebildet werden. Denkbar sind jedoch selbstverständlich weniger Knotenebenen, z.B. bloß eine, bloß zwei oder bloß drei, ebenso wie mehr Knotenebenen, z.B bis zu 100 Knotenebenen.

In Fig. 1 ist weiters beispielhaft eine Mittenachse 22, im Fall einer zylindrischen Durchflusszelle 1 die Zylinderachse, angedeutet, und es ist auch ersichtlich, dass an den Schnittstellen dieser Mittenachse 22 mit den Druckknoten-Ebenen 20 im Betrieb Teilchen agglomeriert werden, wobei derartige Agglomerate mit 23 bezeichnet sind. Die Bildung dieser Teilchen-Agglomerate kommt dadurch zustande, dass zunächst im Ultraschall-Stehwellenfeld in den Druckknoten-Ebenen 20 die Teilchen konzentiert werden, und zwar aufgrund der Wirkung der axialen primären Schallstrahlungskräfte, die auf die Teilchen einwirken. Sodann werden im gezeigten Ausführungsbeispiel die Teilchen innerhalb dieser Ebenen 20 parallel zur Piezowandlerfläche in Richtung zur Mittenachse 22 aufgrund von transversalen primären Schallstrahlungskräften bewegt, die darauf zurückzuführen sind, dass beim gezeigten Ultraschallwandler 12 das Ultraschallfeld in der Mitte in der Regel stärker ist als in den Randbereichen. Dadurch bildet sich eine Art Kette von Teilchenagglomeraten 23 in der Mitte der Durchflusszelle 1. Denkbar wäre es aber auch, die Teilchen nur in den Knotenebenen 20 zu konzentrieren, gegebenenfalls innerhalb von diesen an außermittigen Stellen.

Diese Agglomerate 23 enthalten insbesondere auch Teilchen, die von der Oberfläche des Sensors 5 abgehoben werden, wenn das Ultraschallfeld aktiviert wird, und die Agglomerate 23 sinken beim Deaktivieren des Ultraschallfeldes auf die Oberfläche des ATR-Sensors 5 ab. Diese Sedimentation ist im Vergleich zu einer herkömmlichen Sedimentation von einzelnen Teilchen in einer wesentlich kürzeren Zeit erzielbar, so dass die gewünschten Messungen bei auf dem ATR-Sensor 5 sedimentiertem Material bei gleicher IR-Absorptionsintensität in wesentlich kürzeren Zeitabständen hintereinander durchgeführt werden können. Die Zeitintervalle können beispielsweise ein Viertel so groß sein im Vergleich zur Teilchen-Sedimentation gemäß Stand der Technik.

Vor dem Absinken werden die Teilchen bzw. Agglomerate 23 durch Aktivieren des erwähnten Ultraschallfeldes beispielsweise bis zu 30 s lang oberhalb des ATR-Sensors 5 festgehalten (und wie beschrieben agglomeriert).

Durch diese Beschleunigung der Sedimentationszeit wird im Fall von biologischen Zellen auch ein Verlangsamen der unerwünschten Biofilmbildung auf der Sensoroberfläche erzielt, abgesehen von der höheren Frequenz der Messdatengewinnung.

Bei der Durchführung der Reinigung der Durchflusszelle 1 bzw. insbesondere von deren ATR-Sensoren 5 nach erfolgter Spektroskopie der abgesetzten Teilchen (biologischen Zellen etc.) wird das Ultraschallfeld mehrmals hintereinander aktiviert (wobei die Teilchen vom ATR-Sensor 5 abgehoben werden) und deaktiviert (wobei die Teilchen durch den Flüssigkeitsfluss, z.B. mit einer Rate von 7 ml/min, aus der Durchflusszelle 1 abtransportiert werden). Die Intervalle für das Aktivieren und Deaktivieren des Ultraschallfeldes betragen jeweils beispielsweise 10 s. Das erzielte Reinigungsresultat nach einem Zeitraum von beispielsweise 100 s stellt eine deutliche Verbesserung gegenüber der herkömmlichen chemischen Reinigung, etwa mit 2% H₂O₂-Lösung, mit einer Dauer von 1200 s, dar.

Um das Ultraschallfeld in dieser oder in einer vergleichbaren Weise steuern zu können, ist dem Frequenzgenerator 19 eine in Fig. 1 nur ganz allgemein veranschaulichte Steuereinheit 24 zugeordnet, die mit händischen Eingabemöglichkeiten ebenso versehen sein kann wie mit einer Verbindung zu einem automatischen Prozessüberwachungssystem und Fließsystem (nicht dargestellt), um so automatisch während des Betriebes das Ultraschallfeld in der gegebenen Abfolge, mit der gewünschten Frequenz und Intensität, zu erzeugen und abzuschalten. Dabei ist es auch denkbar, den Frequenzgenerator 19 derart anzusteuern, dass die abgegebene Signalfrequenz variiert wird, um so auch die Frequenz des Ultraschallfeldes zu ändern, etwa um besondere Reinigungseffekte zu erzielen oder die Reinigung je nach den Substanzen zu optimieren.

Bei der Ausbildung gemäß Fig. 1 wird das Ultraschall-Stehwellenfeld in senkrechter Richtung, bezogen auf die Durchflussrichtung (siehe die Pfeile bei den Anschlussleitungen 3, 4), erzeugt. Der Glasplättchen-Träger 14 kann dabei außen über die Durchflusszelle 1 vorstehen, wobei dieser Träger im vorstehend bereits angedeuteten Ausführungsbeispiel beispielsweise kreisrund ist, mit einem Durchmesser von 30 mm und mit einer Dicke von 2,85 mm.

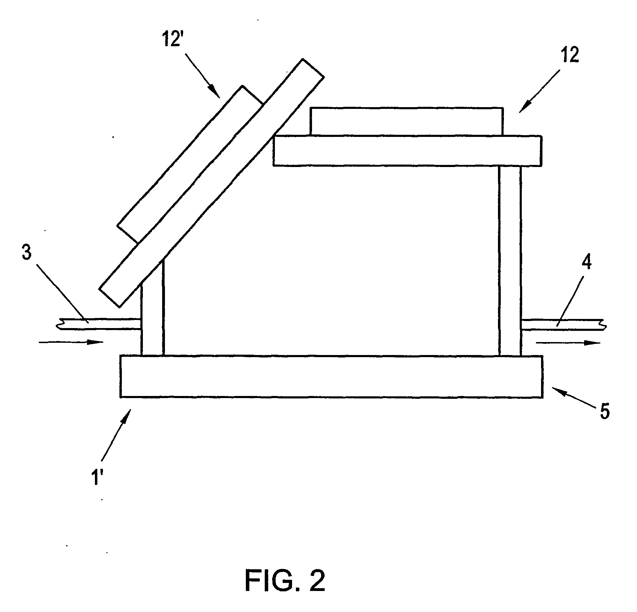

An sich ist es aber auch denkbar, ein Ultraschallfeld auch in einer Richtung schräg zur Durchflussrichtung der Durchflusszelle 2 zu emittieren; eine hierfür geeignete Anordnung ist in Fig. 2 schematisch veranschaulicht, wobei dort zusätzlich zu einem Ultraschallsender 12 wie anhand der Fig. 1 beschrieben ein schräg angeordneter Ultraschallsender 12' vorgesehen ist, der Ultraschall schräg in die entsprechend gestaltete Durchflusszelle 1' abstrahlt. Die beiden Ultraschallemitter 12, 12' können im Prinzip so wie vorstehend anhand der Fig. 1 erläutert aufgebaut sein, so dass sich eine weitere Erläuterung erübrigen kann. Ebenso ist bei der Anordnung gemäß Fig. 2 an der Unterseite der Durchflusszelle 1' wiederum eine ATR-Sensoranordnung 5 vorgesehen, wobei der Einfachheit halber in Fig. 2 die Infrarot-Zu- und -Ableitungen ebenso wie die elektronischen Komponenten weggelassen wurden. Das vom Ultraschallsender 12' emittierte Ultraschallfeld kann insbesondere für eine optimierte Reinigung eingesetzt werden, und das Feld des Ultraschallsenders 12 kann die vorstehend beschriebene Funktion des Anhebens und Agglomerierens von Teilchen haben.

In Abwandlung der beschriebenen Ausführungsformen ist es auch denkbar, an der Unterseite der Durchflusszelle 1 bzw. 1' einen Ultraschallsender anzubringen, wie der Einfachheit halber schematisch in Fig. 1 mit strichlierten Linien 12" veranschaulicht ist. Dieser Ultraschallsender 12" kann ebenfalls so wie vorstehend in Zusammenhang mit dem Ultraschallsender 12 beschrieben aufgebaut sein, und er kann anstatt des Ultraschallsenders 12 vorgesehen sein, wobei dann die Durchflusszelle 1 an ihrer Oberseite anstatt mit dem Ultraschallsender 12 mit einem Ultraschall-Reflektor, also mit einer entsprechenden Glasdecke oder dgl., abgeschlossen sein kann, um so von unten her das Ultraschall-Stehwellenfeld - durch den ATR-Sensor 5 hindurch - zu erzeugen. Weiters ist es auch denkbar, an beiden Seiten Ultraschallsender 12, 12" vorzusehen, die somit Ultraschall im in Fig. 1 gezeigten Beispiel in entgegengesetzten Richtungen in das Innere der Durchflusszelle 1 abstrahlen; wenn diese Ultraschallfelder dann bezüglich Frequenz und Intensität entsprechend geregelt werden, d.h. dieselbe Frequenz und dieselbe Amplitude aufweisen, kann so wiederum durch die beiden emittierten Ultraschallfelder ein Stehwellenfeld erhalten werden.

Im Falle der Verwendung eines unteren Ultraschallsenders 12" kann auch relativ einfach durch Regelung der Ultraschall-Frequenz der Abstand der untersten Knotenebene 20 von der SensorOberfläche eingestellt werden, wobei es insbesondere möglich ist, im Betrieb die unterste Knotenebene in der Durchflusszelle 1 bis in die Ebene der Oberfläche des Sensors 5 zu verschieben.

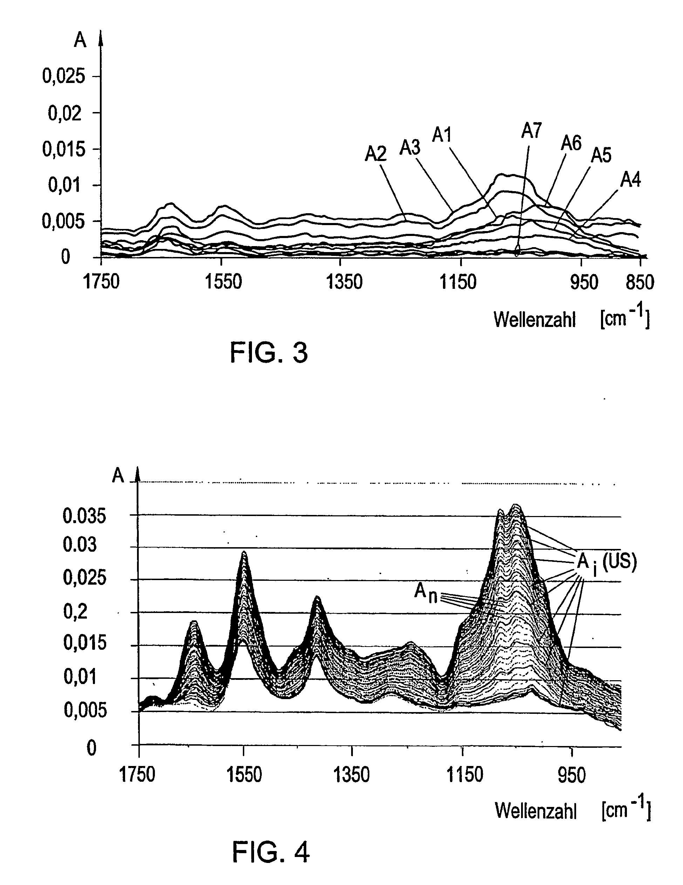

In Fig. 3 ist in einem Diagramm mit verschiedenen Absorptionskurven (Absorption A in beliebiger Einheit über der Wellenzahl in cm⁻¹) das Ergebnis verschiedener Reinigungstechniken vergleichend veranschaulicht, wobei im Bereich der Wellenzahl 1000 cm⁻¹ dann noch merklich eine Substanz feststellbar ist, wenn keine Reinigung durchgeführt wurde (Kurven A1, A2 und A3), wogegen gemäß Kurven A4, A5 und A6 ein etwas besseres Ergebnis erzielt wurde, wenn eine chemische Reinigung gemäß Stand der Technik eingesetzt wurde. Wie dabei ersichtlich ist, ergibt sich aber immer noch aufgrund der IR-Spektroskopie das mögliche Vorhandensein einer Substanz bei einer Wellenzahl von 1000 cm⁻¹. Schließlich zeigen die drei knapp beieinanderliegenden unteren Kurven, die gebündelt bei A7 veranschaulicht sind, dass nach der durchgeführten Ultraschall-Reinigung praktisch keine Substanz mehr feststellbar ist, was auf die optimale Reinigungswirkung aufgrund der vorliegenden Reinigunstechniken mit Ultraschall hinweist. Die drei Kurven A1, A2, A3 bzw. A4, A5, A6 bzw. A7 (3x) stellen jeweils den Hintergrund nach einer ersten (A1/A4), nach einer zweiten (A2/A5) und nach einer dritten (A3/A6) Messung dar und es wird in Fig. 3 ersichtlich, dass die Erfindung - siehe die drei Kurven A7 - die Langzeitstabilität erhöht.

In Fig. 4 ist vergleichend für den Fall einer normalen Sedimentation sowie für die erfindungsgemäß verbesserte Agglomerat-Sedimentation ein Diagramm Absorption A (in beliebiger Einheit) über der Wellenzahl (in cm⁻¹) gezeigt, wobei wiederum im Bereich benachbart der Wellenzahl 1050 cm⁻¹ entsprechende Peaks gemessen wurden, was auf das Vorhandensein beispielsweise von Hefezellen in der Durchflusszelle 1 hindeutet. Mit den in Fig. 4 stärker gezeichneten Kurven Ai(US) (US - Ultraschall) sind die Messergebnisse bei der Anwendung von Ultraschall zur Agglomeration der Teilchen, mit der danach sich ergebenden schnelleren Sedimentation, veranschaulicht; die einzelnen Messkurven wurden dabei in Zeitabständen von 5 s aufgenommen. In den gleichen Zeitabständen wurden andererseits Messkurven An - mit derselben Durchflusszelle 1 - mit üblicher Sedimentation der Teilchen, nämlich Hefezellen, aufgenommen, also ohne Anwendung von Ultraschall. Die erhaltenen Messkurven An haben einen viel geringeren gegenseitigen Abstand, was unmittelbar auf die geringere Sedimentation der Teilchen in der zur Verfügung stehenden (selben) Zeit (von 5 s) hinweist.

## Patentansprüche

1. Verfahren zur Durchführung von Messungen durch Absorptionsspektroskopie unter Verwendung einer Durchflusszelle (1; 1') mit einem Sensor (5), insbesondere einer IR-Spektroskopie-Durchflusszelle, vorzugsweise einer FTIR-ATR-Durchflusszelle, beispielsweise im Zuge der Prozessüberwachung von biotechnologischen Prozessen, **dadurch gekennzeichnet, dass** in der Durchflusszelle (1; 1') ein Ultraschallfeld in der Art einer Stehwelle mit zumindest einer Druckknoten-Ebene (20) erzeugt wird, wobei in der Durchflusszelle vorliegende Teilchen Teilchen aufgrund von axialen primären Schallstrahlungskräften in Richtung der Druckknoten-Ebene des Ultraschall-Stehwellenfeldes sowie aufgund von transversalen primären Schallstrahlungskräften in dieser Ebene in Richtung einer Mittelachse (22) der Durchflusszelle gedrängt werden, so daß sie an den Schnittstellen der Mittelachse (22) mit der Druckknoten-Ebene zu Teilchenagglomeraten (23) gesammelt werden.

2. Verfahren nach Anspruch 1, **dadurch gekennzeichnet, dass** das Ultraschall-Stehwellenfeld zwischen Messungen erzeugt und das Ultraschallfeld nach dem Sammeln der Teilchenagglomerate abgeschaltet wird, wonach die Teilchenagglomerate (23) gegebenenfalls mit Hilfe von durch die Durchflusszelle (1; 1') strömender Flüssigkeit aus der Durchflusszelle abtransportiert werden.

3. Verfahren nach Anspruch 2, **dadurch gekennzeichnet, dass** die Teilchenagglomerate (23) vor ihrem Abtransport aus der Durchflusszelle zur Durchführung einer Spektroskopie auf einem eine untere Begrenzung der Durchflusszelle bildenden Sensor sedimentieren gelassen werden.

4. Verfahren nach einem der Ansprüche 1 bis 3, **dadurch gekennzeichnet, dass** das Ultraschall-Stehwellenfeld durch Überlagerung einer von einem Ultraschallsender (12) abgestrahlten Ultraschallwelle mit einer reflektierten Ultraschallwelle erzeugt wird.

5. Verfahren nach einem der Ansprüche 1 bis 3, **dadurch gekennzeichnet, dass** das Ultraschall-Stehwellenfeld durch Überlagerung von mehreren gesondert erzeugten Ultraschallwellen erzeugt wird.

6. Verfahren nach einem der Ansprüche 2 bis 5, **dadurch gekennzeichnet, dass** während der Reinigung das Ultraschallfeld zyklisch, z.B. alle 10 s, aktiviert und deaktiviert wird, während der Durchfluss durch die Durchflusszelle aufrecht erhalten wird, wobei während der Aktivierung des Ultraschallfeldes Teilchen und gegebenenfalls Biofilm angehoben und agglomeriert werden und während der Deaktivierung die Agglomerate aus der Durchflusszelle abtransportiert werden.

7. Verfahren nach einem der Ansprüche 1 bis 6, **dadurch gekennzeichnet, dass** das Ultraschallfeld im Wesentlichen senkrecht zur Durchflussrichtung der Durchflusszelle erzeugt wird.

8. Verfahren nach einem der Ansprüche 1 bis 7, **dadurch gekennzeichnet, dass** das Ultraschallfeld, gegebenenfalls ein alternatives Ultraschallfeld, schräg zur Durchflussrichtung der Durchflusszelle erzeugt wird.

9. Verfahren nach einem der Ansprüche 1 bis 8, **dadurch gekennzeichnet, dass** ein Ultraschallfeld mit einer Frequenz in der Größenordung von mehreren Hundert kHz bis zu einigen wenigen MHz, vorzugsweise im Bereich von 1,5 bis 2,0 MHz, insbesondere im Bereich von 1,8 bis 1,9 MHz, erzeugt wird.

10. Verfahren nach einem der Ansprüche 1 bis 9, **dadurch gekennzeichnet, dass** die Ultraschall-Frequenz während der Reinigung variiert

11. Einrichtung zur Durchführung von Messungen durch Absorptionsspektroskopie mit einer Durchflusszelle (1; 1') mit einem Sensor, insbesondere einer IR-Spektroskopie-Durchflusszelle, vorzugsweise einer FTIR-ATR-Durchflusszelle, beispielsweise im Zuge der Prozessüberwachung von biotechnologischen Prozessen, und mit zumindest einem Ultraschallsender (12; 12'; 12''), **dadurch gekennzeichnet, dass** der an einer Wand der Durchflusszelle (1; 1') vorgesehene Ultraschallsender (12; 12") Teil einer Einrichtung (12 - 5; 12 - 12") zur Erzeugung eines Ultraschallfeldes in der Art einer Stehwelle mit zumindest einer Druckknoten-Ebene (20) in der Durchflusszelle ist, wobei in der Durchflusszelle vorliegende Teilchen aufgrund von axialen primären Schallstrahlungskräften in Richtung der Druckknoten-Ebene des Ultraschall-Stehwellenfeldes sowie aufgund von transversalen primären Schallstrahlungskräften in dieser Ebene in Richtung einer Mittelachse (22) der Durchflusszelle gedrängt werden, so daß sie an den Schnittstellen der Mittelachse (22) mit der Druckknoten-Ebene zu Teilchenagglomeraten (23) gesammelt werden.

12. Einrichtung nach Anspruch 11, **dadurch gekennzeichnet, dass** dem Ultraschallsender (12; 12'; 12") eine Steuereinheit (24) zum Ein- und Ausschalten, zur Erzeugung eines Ultraschallfeldes in der Art einer Stehwelle in der Druchflusszelle (12, 12', 12"), zugeordnet ist.

13. Einrichtung nach Anspruch 11 oder 12, **dadurch gekennzeichnet, dass** der Ultraschallsender (12) durch einen Piezowandler gebildet ist.

14. Einrichtung nach Anspruch 13, **dadurch gekennzeichnet, dass** der Piezowandler ein auf einem Glasplättchen (14) angeordnetes Piezoelement (13) aufweist.

15. Einrichtung nach Anspruch 14, **dadurch gekennzeichnet, dass** das Glasplättchen (14) mit seiner vom Piezoelement (13) abgewandten Seite eine Begrenzung der Durchflusszelle (1) bildet.

16. Einrichtung nach einem der Ansprüche 11 bis 13, **dadurch gekennzeichnet, dass** der Ultraschallsender (12") an der Außenseite des Sensors (5) angeordnet ist und im Betrieb den Ultraschall durch den Sensor (5) hindurch abstrahlt.

17. Einrichtung nach einem der Ansprüche 11 bis 16, **dadurch gekennzeichnet, dass** dem Ultraschallsender (12) ein Ultraschall-reflektor gegenüberliegt.

18. Einrichtung nach einem der Ansprüche 11 bis 17, **dadurch gekennzeichnet, dass** zwei Ultraschallsender (12, 12''), insbesondere Piezowandler, einander gegenüberliegend, mit der Durchflusszelle (1) zwischen ihnen, angeordnet und zur Abstrahlung von Ultraschallwellen gleicher Frequenz und Amplitude eingerichtet sind.

19. Einrichtung nach einem der Ansprüche 11 bis 18, **dadurch gekennzeichnet, dass** zumindest ein Ultraschallsender (12'), insbesondere Piezowandler, mit seiner Ultraschall-Abgaberichtung schräg zur Durchflussrichtung der Durchflusszelle (1) ausgerichtet angeordnet ist.

## Claims

1. A method for carrying out absorption spectroscopy measurements by using a flow cell (1; 1') with a sensor (5), in particular an IR spectroscopic flow cell, preferably an FTIR-ATR flow cell, e.g. during process monitoring of biotechnological processes, **characterised in that** an ultrasonic field of the type of a standing wave including at least one pressure node plane (20) is generated in the flow cell (1; 1'), wherein particles present in the flow cell are, as a consequence of axial primary sound radiation forces, urged towards the pressure node plane of the ultrasonic standing wave field and, within this plane, on account of transversal primary sound radiation forces, towards a central axis (22) of the flow cell, so that they will be collected to particle agglomerates (23) at the interfaces of the central axis (22) with the pressure node plane.

2. The method according to claim 1, **characterised in that** the ultrasonic standing wave field is generated between measurements, and the ultrasonic field is switched off after the particle agglomerates have been collected, whereupon the particle agglomerates (23) optionally are transported away from the flow cell by means of fluid flowing through the flow cell (1; 1').

3. The method according to claim 2, **characterised in that** before being transported away from the flow cell, the particle agglomerates (23) are allowed to sediment on a sensor constituting a lower boundary of the flow cell for carrying out spectroscopy.

4. The method according to any one of claims 1 to 3, **characterised in that** the ultrasonic standing wave field is generated by superposition of an ultrasonic wave radiated from an ultrasonic emitter (12) with a reflected ultrasonic wave.

5. The method according to any one of claims 1 to 3, **characterised in that** the ultrasonic standing wave field is generated by superposition of several separately generated ultrasonic waves.

6. The method according to any one of claims 2 to 5, **characterised in that** during cleaning, the ultrasonic field is cyclically activated and deactivated, e.g. every 10 s, while the flow through the flow cell is maintained, particles and, optionally, biofilm being lifted and agglomerated during the activation of the ultrasonic field and the agglomerates being transported away from the flow cell during the deactivation.

7. The method according to any one of claims 1 to 6, **characterised in that** the ultrasonic field is generated substantially perpendicular to the flow direction of the flow cell.

8. The method according to any one of claims 1 to 7, **characterised in that** the ultrasonic field, optionally an alternative ultrasonic field, is generated obliquely to the flow direction of the flow cell.

9. The method according to any one of claims 1 to 8, **characterised in that** an ultrasonic field having a frequency in the order of several hundred kHz up to a few MHz, preferably in the range of from 1.5 to 2.0 MHz, in particular in the range of from 1.8 to 1.9 MHz, is generated.

10. The method according to any one of claims 1 to 9, **characterised in that** the ultrasonic frequency is varied during cleaning.

11. A device for carrying out absorption spectroscopy measurements, comprising a flow cell (1; 1') with a sensor, in particular an IR spectroscopic flow cell, preferably an FTIR-ATR flow cell, e.g. during process monitoring of biotechnological processes, and comprising at least one ultrasonic emitter (12; 12'; 12''), **characterised in that** the ultrasonic emitter (12; 12'') provided on a wall of the flow cell (1; 1') is part of a means (12-5; 12-12'') for generating an ultrasonic field of the type of a standing wave including at least one pressure node plane (20) in the flow cell, wherein particles present in the flow cell are, as a consequence of axial primary sound radiation forces, urged towards the pressure node plane of the ultrasonic standing wave field and, within this plane, on account of transversal primary sound radiation forces, are urged towards a central axis (22) of the flow cell so that they will be collected to particle agglomerates (23) at the interfaces of the central axis (22) with the pressure node plane.

12. The device according to claim 11, **characterised in that** the ultrasonic emitter (12; 12'; 12'') has an associated control unit (24) for switching on and off, for generating an ultrasonic field of the type of a standing wave in the flow cell (12, 12', 12").

13. The device according to claim 11 or 12, **characterised in that** the ultrasonic emitter (12) is formed by a piezoelectric transducer.

14. The device according to claim 13, **characterised in that** the piezoelectric transducer comprises a piezo-element (13) arranged on a glass platelet (14).

15. The device according to claim 14, **characterised in that** with that side which faces away from the piezo-element (13), the glass platelet (14) forms a boundary of the flow cell (1).

16. The device according to any one of claims 11 to 13, **characterised in that** the ultrasonic emitter (12'') is arranged on the outer side of the sensor (5) and, during operation, radiates the ultrasound through the sensor (5).

17. The device according to any one of claims 11 to 16, **characterised in that** an ultrasonic reflector is arranged opposite the ultrasonic emitter (12).

18. The device according to any one of claims 11 to 17, **characterised in that** two ultrasonic emitters (12, 12''), in particular piezoelectric transducers, are arranged opposite each other, with the flow cell (1) interposed, and are adapted for radiating ultrasonic waves of the same frequency and amplitude.

19. The device according to any one of claims 11 to 18, **characterised in that** at least one ultrasonic emitter (12'), in particular a piezoelectric transducer, is arranged with its direction of ultrasonic emission oriented obliquely to the flow direction of the flow cell (1).

## Revendications

1. Procédé de réalisation de mesures par spectroscopie par absorption en utilisant une cellule d'écoulement (1 ; 1') avec un capteur (5), en particulier une cellule d'écoulement à spectroscopie IR, de préférence une cellule d'écoulement FTIR-ATR, par exemple au cours de la surveillance de procédés biotechnologiques, **caractérisé en ce que**, dans la cellule d'écoulement (1 ; 1') on produit un champ ultrasonique à la manière d'une onde stationnaire avec au moins un plan de noeuds de pression (20), dans lequel des particules présentes dans la cellule d'écoulement sont pressées en raison de forces axiales primaires de rayonnement sonique dans la direction du plan de noeuds de pression du champ d'ondes stationnaires ultrasoniques ainsi qu'en raison de forces transversales primaires de rayonnement sonique dans ce plan dans la direction d'un axe central (22) de la cellule d'écoulement, de sorte qu'elles se rassemblent en agglomérats particulaires (23) aux interfaces de l'axe central (22) avec le plan de noeuds de pression.

2. Procédé selon la revendication 1, **caractérisé en ce que** le champ d'ondes stationnaires ultrasoniques est produit entre les mesures et le champ ultrasonique est déconnecté après l'assemblage des agglomérats particulaires, après quoi les agglomérats particulaires (23) sont le cas échéant évacués de la cellule d'écoulement à l'aide d'un liquide s'écoulant à travers la cellule d'écoulement (1 ; 1').

3. Procédé selon la revendication 2, **caractérisé en ce qu'**on laisse les agglomérats particulaires (23) se sédimenter avant leur évacuation de la cellule d'écoulement pour réaliser une spectroscopie sur un capteur formant une limitation inférieure de la cellule d'écoulement.

4. Procédé selon l'une quelconque des revendications 1 à 3, **caractérisé en ce que** ce que le champ d'ondes stationnaires ultrasoniques est produit par superposition d'une onde ultrasonique émise par un émetteur d'ultrasons (12) avec une onde ultrasonique réfléchie.

5. Procédé selon l'une quelconque des revendications 1 à 3, **caractérisé en ce que** le champ d'ondes stationnaires ultrasoniques est produit par superposition de plusieurs ondes ultrasoniques produites séparément.

6. Procédé selon l'une quelconque des revendications 2 à 5, **caractérisé en ce que**, au cours de la purification, le champ ultrasonique est activé et désactivé de manière cyclique, par exemple toutes les dix secondes, tandis que l'écoulement à travers la cellule d'écoulement est maintenu, dans lequel, au cours de l'activation du champ ultrasoniques, des particules et éventuellement un biofilm sont soulevés et agglomérés et, au cours de la désactivation, les agglomérats sont évacués hors de la cellule d'écoulement.

7. Procédé selon l'une quelconque des revendications 1 à 6, **caractérisé en ce que** le champ ultrasonique est produit sensiblement perpendiculairement à la direction d'écoulement de la cellule d'écoulement.

8. Procédé selon l'une quelconque des revendications 1 à 7, **caractérisé en ce que** le champ ultrasonique, le cas échéant un autre champ ultrasonique, est produit de manière inclinée par rapport à la direction d'écoulement de la cellule d'écoulement.

9. Procédé selon l'une quelconque des revendications 1 à 8, **caractérisé en ce que** l'on produit un champ ultrasonique d'une fréquence d'un ordre de grandeur de plusieurs centaines de kHz jusqu'à quelques MHz, de préférence dans la plage de 1,5 à 2,0 MHz, en particulier dans la plage de 1,8 à 1,9 MHz.

10. Procédé selon l'une quelconque des revendications 1 à 9, **caractérise en ce que** l'on fait varier la fréquence ultrasonique au cours de la purification.

11. Dispositif de réalisation de mesures par spectroscopie par absorption en utilisant une cellule d'écoulement (1 ; 1') avec un capteur (5), en particulier une cellule d'écoulement à spectroscopie IR, de préférence une cellule d'écoulement FTIR-ATR, par exemple au cours de la surveillance de procédés biotechnologiques, et avec au moins un émetteur d'ultrasons (12 ; 12' ; 12 "), **caractérisé en ce que** l'émetteur d'ultrasons (12 ; 12") prévu sur une paroi de la cellule d'écoulement (1 ; 1') fait partie d'un dispositif (12-5 ; 12-12") pour produire un champ ultrasonique à la manière d'une onde stationnaire avec au moins un plan de noeuds de pression (20) dans la cellule d'écoulement, dans lequel les particules présentes dans la cellule d'écoulement sont pressées en raison de forces axiales primaires de rayonnement sonique dans la direction du plan de noeuds de pression du champ d'ondes stationnaires ultrasoniques ainsi qu'en raison de forces transversales primaires de rayonnement dans ce plan en direction d'un axe central (22) de la cellule d'écoulement de sorte qu'elles soient assemblées en agglomérats particulaires (23) aux interfaces de l'axe central (22) avec le plan de noeuds de pression.

12. Dispositif selon la revendication 11, **caractérisé en ce qu'**une unité de commande (24) est associée à l'émetteur d'ultrasons (12 ; 12' ; 12") pour le connecter et le déconnecter, afin de produire un champ ultrasonique à la manière d'une onde stationnaire dans la cellule d'écoulement (12,12', 12").

13. Dispositif selon la revendication 11 ou 12, **caractérisé en ce que** l'émetteur d'ultrasons est formé par un transducteur piézoélectrique.

14. Dispositif selon la revendication 13, **caractérisé en ce que** le transducteur piézoélectrique présente un élément piézoélectrique (13) aménagé sur une plaquette de verre (14).

15. Dispositif selon la revendication 14, **caractérisé en ce que** la plaquette de verre (14) forme une limitation de la cellule d'écoulement (1) avec son côté opposé à l'élément piézoélectrique (13).

16. Dispositif selon l'une quelconque des revendications 11 à 13, **caractérisé en ce que** l'émetteur d'ultrasons (12") est aménagé sur le côté extérieur du capteur (5) et diffuse en service les ultrasons à travers le capteur (5).

17. Dispositif selon l'une quelconque des revendications 11 à 16, **caractérisé en ce qu'**un réflecteur d'ultrasons est disposé en regard de l'émetteur d'ultrasons (12).

18. Dispositif selon l'une quelconque des revendications 11 à 17, **caractérisé en ce que** deux émetteurs d'ultrasons (12, 12"), en particulier des transducteurs piézoélectriques, sont disposés en regard l'un de l'autre, la cellule d'écoulement (1) étant située entre eux, et sont conçus pour diffuser des ondes ultrasoniques de même fréquence et de même amplitude.

19. Dispositif selon l'une quelconque des revendications 11 à 18, **caractérisé en ce qu'**au moins un émetteur d'ultrasons (12'), en particulier un transducteur piézoélectrique, est agencé avec son dispositif de délivrance d'ultrasons de manière inclinée par rapport à la direction d'écoulement de la cellule d'écoulement (1).
